# EUROPEAN PATENT SPECIFICATION

(11) **EP 4 453 437 B1**
(45) Date of publication and mention of the grant of the patent: **10.12.2025**
(21) Application number: 22839432.6
(22) Date of filing: 22.12.2022
(51) Int. Cl.: F16B 7/02

(54) **CONNECTOR ASSEMBLY**
VERBINDERANORDNUNG
ENSEMBLE RACCORD

(30) Priority: 23.12.2021 GB 202118984
(43) Date of publication of application: 30.10.2024
(73) Proprietor: THREE SMITH GROUP LIMITED, Elland, West Yorkshire HX5 9JP (GB)
(72) Inventor: DUFAUX, Christopher, Paul Daniel,, Estate Elland Yorkshire HX5 9JP (GB); SCHOFIELD, Dale, Estate Elland Yorkshire HX5 9JP (GB)
(74) Representative: Appleyard Lees IP LLP
(86) International application number: PCT/GB2022/053364
(87) International publication number: WO 2023/118883

(56) References cited:
- FR-A5- 2 109 046

## Description

The present disclosure relates to a connector assembly.

### Background

It is a common requirement to connect structural members and/or components together to form a rigid and/or robust structure.

A traditional method of connecting posts and rails is by welding, which provides a secure and rigid connection. However, assembly or disassembly of a structure that is welded is time consuming and requires skilled labour and specialist equipment. Following disassembly, individual components of the structure are not easily reusable as they need to be prepared (e.g. machined), resulting in a loss of material and involving a large investment of time.

It is known to use fittings or couplings that connect structural members together and allow the structure to be disassembled and reused. A person assembling or disassembling the structure must handle parts of the coupling, its fixing members (e.g. a screw or bolt), as well as the structural members, and simultaneously hold and manipulate a tool to work the fixing member. This can be cumbersome, time consuming and frustrating, and can lead to an insecure connection of the structural members if they are not aligned properly during assembly. To reduce error and increase user safety, it is common for two people work together. Also the fixing members tend to get lost and/or damaged over time, making re-use of the connectors frustrating.

Hence a connector which is reusable, securely connects structural members, and allows a single user to quickly connect and disconnect structural members is highly desirable.

FR 2 109 046 A5 discloses a connector assembly.

### Summary

According to the present disclosure there is provided an apparatus as set forth in the appended claims. Other features of the invention will be apparent from the dependent claims, and the description which follows.

Accordingly there may be provided a connector assembly (10, 12, 14) for engagement with a first member (100), wherein the first member (100) defines a cavity (102) with a contact surface (104), and an opening (106) to the cavity (102).

The connector assembly (10, 12, 14) may comprise a core element (300) having an outer engagement surface (302) extending from a leading edge end (310) towards a trailing edge end (312). The connector assembly (10, 12, 14) may comprise an engagement sleeve (400) extending from a leading edge end (410) to a trailing edge end (412), the engagement sleeve (400) defining a passage (402) having a central axis (450), wherein the engagement sleeve passage (402) has an opening (406) at the trailing edge end (412). The engagement sleeve opening (406) and engagement sleeve passage (402) may be configured to receive at least part of the core element (300) extending from the leading edge end (310) of the core element (300). The engagement sleeve (400) may comprise an engagement member (420) having an outer surface (422) and an inner surface (404). The outer surface (422) of the engagement member (420) may be configured for engagement with the contact surface (104) of the first member (100). The inner surface (404) of the engagement member (420) may have a first region (452) and a second region (454). The second region (454) may extend from a free end (440) defined by the leading edge end (410) to the end of the first region (452), and the first region (452) may extend towards the opening (406) of the engagement sleeve passage (402). The inner surface (404) of the engagement member (420) and the outer engagement surface (302) of the core element (300) may be configured to be slideable relative to each other in the first region (452) and the second region (454). The core element (300) and engagement sleeve (400) may be configured such that, with the engagement sleeve (400) entered in the cavity (102) of the first structural member the connector assembly (10, 12, 14) is operable to be in a first configuration in which the engagement sleeve (400) is slideable relative to the cavity (102) contact surface (104) of the first structural member when the leading edge end (310) of the core element (300) is located along the first region (452) of the engagement member (420). The connector assembly (10) may be operable to be in a second configuration in which the engagement sleeve (400) is locked relative to the first structural member (100) when the leading edge end (310) of the core element (300) is engaged with the second region (454) of the engagement member (420).

The core element (300) and engagement sleeve (400) may be configured such that when the leading edge end (310) of the core element (300) slides along at least part of the second region (454) of the inner surface (404) of the engagement member (420), the outer surface (422) of the engagement member (420) is urged to engage with the cavity contact surface (104) of the first member (100) until the connector assembly (10) is in the second configuration.

When the leading edge end (310) of the core element (300) is located along the first region (452) of the inner surface (404) of the engagement member (420), a clearance fit may be maintained between the inner surface (404) of the engagement sleeve (400) and the outer engagement surface (302) of the core element (300).

When the leading edge end (310) of the core element (300) is engaged with the second region (454) of the inner surface (404) of the engagement member (420), there may be an interference fit between the inner surface (404) of the engagement sleeve (400) and the outer engagement surface (302) of the core element (300).

The core element (300) and engagement sleeve (400) may be configured such that as the leading edge end (310) of the core element (300) moves from being engaged with the second region (454) of the engagement member (420) to being located along the first region (452) of the engagement member (420), the outer engagement surface (302) of the core element (300) disengages with the inner engagement surface (404) of the engagement sleeve (400) so as to permit the engagement sleeve engagement member (420) to disengage with the cavity contact surface (104) of the first member (100), and such that the connector assembly (10) transitions from the second configuration to the first configuration to thereby allow the engagement sleeve (400) to slide along the cavity contact surface (104) of the first structural member (100).

In the first configuration the free end (440) of the engagement member (420) may be a first distance (d1) from the central axis (450); and in the second configuration the free end (440) of the engagement member (420) is a second distance (d2) from the central axis (450), the second distance (d2) being greater than the first distance (d1).

In the first configuration the engagement member outer surface (422) may increase in diameter from the leading edge end (410) from a first diameter to a second diameter and then extends towards the trailing edge end (412) with a region (470) of constant diameter.

In the first configuration the engagement member inner surface (404) may increase in diameter from the leading edge end (410) along at least part of the engagement member inner surface (404) towards the trailing edge end (412).

The core element (300) outer engagement surface (302) may increase in diameter from the leading edge end (310) towards the trailing edge end (312) terminating in a region (370) of constant diameter.

The core element (300) may be provided with a first locking feature (330). The engagement sleeve (400) may be provided with a second locking feature (430). The first locking feature (330) and second locking feature (430) may be configured to engage with one another to lock the engagement sleeve (400) and core element (300) together. The first locking feature (330) and second locking feature (430) may be configured to disengage from one another so the engagement sleeve (400) and core element (300) are separable.

The first locking feature (330) and the second locking feature (430) may be positioned such that before the first locking feature (330) engages with the second locking feature (430), the leading edge end (310) of the core element (300) is in the first region (452) of the engagement sleeve (400) and the connector assembly (10, 12, 14) is in the first configuration. After the first locking feature (330) engages with the second locking feature (430), the leading edge end (310) of the core element (300) may be in the second region (454) of the engagement sleeve (400).

The engagement member outer surface (422) of the engagement sleeve (400) may be smooth or provided with at least one engagement tooth (424).

The core element (300) may substantially close the engagement sleeve passage (402).

The core element (300) may define an opening (306) at the trailing edge end (312) configured for receiving and engaging with a second member (200).

The engagement sleeve (400) may comprise additional engagement members (420). The plurality of engagement members (420) may be spaced apart around the central axis (450). Each engagement member (420) may have an outer surface (424) for engagement with the cavity (102) contact surface (104), an inner surface (404) for engagement with the core element (300) outer surface (302) and a free end (440) at the leading edge end (410), such that the free ends (440) are spaced apart from one another around the central axis (450) with a slot (408) therebetween.

The first locking feature (330) may be provided on an outer surface of the core element (300), between the section of the radially outer engagement surface (302) which engages with the radially inner surface (404) of the engagement member (420) and the trailing edge end (312) of the core element (300).

The second locking feature (430) may be provided on the inner surface of the engagement sleeve (400), between the radially inner engagement surface (404) of the engagement member (420) and the trailing edge end (412) of the engagement sleeve (400).

The first locking feature (330) on the core element (300) may be a first screw thread. The second locking feature (430) on the engagement sleeve (400) may be a second screw thread. Transition from the first configuration to the second configuration starts when the first locking feature (330) and second locking feature (430) engage.

The engagement sleeve engagement member (420) radially inner surface (404) may be smooth, and the core element (300) outer engagement surface (302) may be smooth, such that when the leading edge end (310) of the core element (300) is in the second region (454) of the engagement sleeve (400), the radially inner surface (404) of the engagement member (420) is in contact with the core element outer engagement surface (302).

The first locking feature (330) may be provided on the outer surface (302) of the core element (300), and may comprise a mount (340) which extends outwards from, and extends along, the outer engagement surface (302) from the core element (300) leading edge (310) towards the core element (300) trailing edge (312), and further comprises teeth (342) provided on a side of the mount to extend in a first circumferential direction.

The second locking feature (430) may be provided on a side of the engagement sleeve (400) engagement member (420) and comprises teeth (442) which extend in a second circumferential direction opposite to the first circumferential direction.

The teeth (342) of the first locking feature (330) and teeth (442) of the second locking feature (430) may be configured for interlocking engagement such that when the teeth (342) of the first locking feature (330) and teeth (442) of the second locking feature (430) are engaged, the core element (300) and engagement sleeve (400) are locked together.

The core element (300) and engagement sleeve (400) may be rotatable relative to one another around the central axis (450) to engage and disengage the first locking feature (330) and second locking feature (430).

There may also be provided a kit of parts for a structure comprising: a connector assembly (10, 12, 14) as according to the present disclosure, and a first member (100) which defines a cavity (102) with a contact surface (104), and an opening (106) to the cavity (102) to receive at least the leading edge end (410) of the engagement sleeve (400).

The cavity (102) contact surface (104) for engagement with the sleeve engagement member (420) may be of substantially constant cross-sectional area.

The diameter of the cavity contact surface (104) for engagement with the sleeve engagement member (420) may at most be the same as the outer diameter of the sleeve engagement member outer surface (422).

The kit of parts may further comprise a second member (200); the second member (200) extending from and/or coupled to the core element (300), such that the first member (100) is coupled to the second member (200).

The first member (100) and/or second member (200) may be a post or rail.

The first member (100) may be a post and the second member (200) may be an end cap or mount for an accessory.

The engagement sleeve (400) may provides fluid communication between the first member (100) cavity (102) to an external surface of the cap.

Hence there is provided a connector assembly and a kit of parts for a structure. The elements of the connector assembly 10, 12, 14 may be easily assembled and combined with a structural member and/or accessory by one user with no need for further parts (for example a screw) or the use of any bonding material.

### Brief Description of the Drawings

Examples of the present disclosure will now be described with reference to the accompanying drawings, in which:
Figure 1 shows an exploded perspective view of a first example of a connector assembly according to the present disclosure;
Figures 2 to 5 show stages of assembly of the connector assembly shown in figure 1;
Figure 6 shows a perspective view of a partial assembly of the components of the connector assembly shown in figures 1 to 5;
Figure 7 shows a perspective view of completed assembly of the components of the connector assembly shown in figures 1 to 6;
Figure 8 shows an exploded view of a second example of a connector assembly according to the present disclosure;
Figures 9 to 13 show stages of assembly of the connector assembly shown in figure 8;
Figure 14 shows an exploded view of a third example of a connector assembly according to the present disclosure;
Figures 15 to 19 show the stages of assembly of the connector assembly shown in figure 14;
Figure 20 is a perspective view of the connector assembly shown in figures 14 to 19;
Figures 21 to 22 show stages of disassembly of the connector assembly shown in figures 14 to 20;
Figure 23 shows a further example of the second example of the connector assembly;
Figure 24 shows a further example of the third example of the connector assembly; and
Figure 25 shows an assembly using a connector assembly according to the present disclosure.

### Detailed Description

The present disclosure relates to a connector assembly 10, 12, 14, a kit of parts (not claimed) comprising a connector assembly 10, 12, 14 of the present disclosure and a method of assembly (not claimed) of an assembly incorporating the connector assembly 10, 12, 14 and/or a kit of parts of the present disclosure.

The present disclosure relates to a connector assembly 10, 12, 14 for engagement with a first member 100 (i.e. a structural member) which defines a cavity 102 with a contact surface 104, and an opening 106 to the cavity 102, for example a hollow pipe or tube, which may be provided as a post or rail. The connector assembly 10, 12, 14 may be configured to engage in the cavity defined by the wall of a tube. The connector assembly 10, 12, 14 may be configured to engage in an open end of a tubular and/or structural member 100 which defines an opening to a cavity defined by the wall of the tubular and/or structural member 100.

As shown in the figures, the structural member 100, and/or cavity 102 may be circular in cross-section. In other examples the structural member 100, and/or cavity 102 may be polygonal (for example square) in cross-section.

The connector assembly 10, 12, 14 comprises a core element 300 and an engagement sleeve 400. In the examples shown these are circular in cross-section. In other examples the core element 300 and engagement sleeve 400 may be polygonal (for example square) in cross-section.

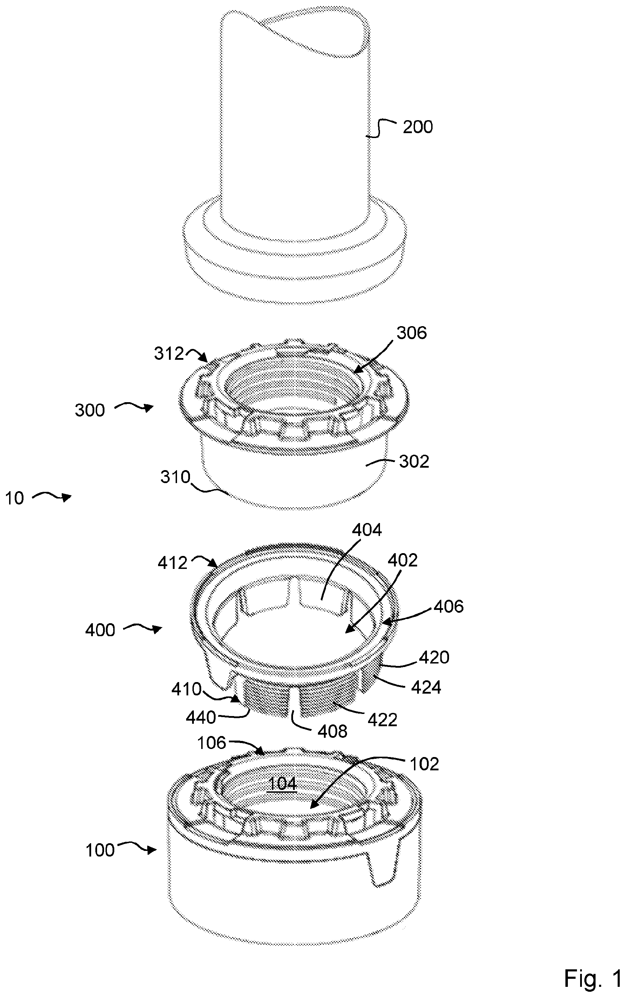

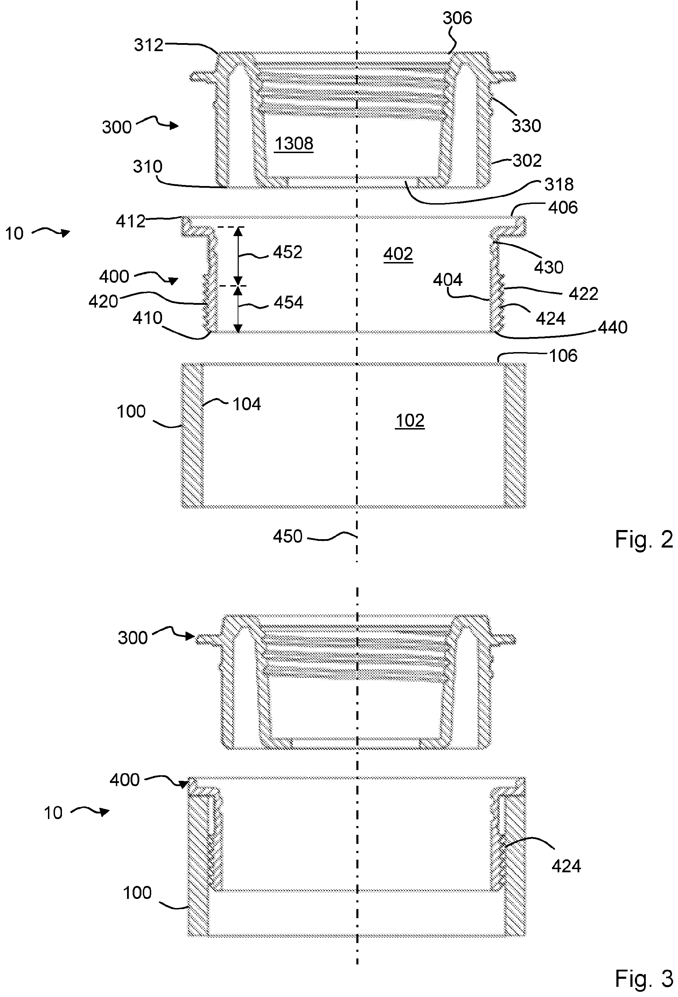

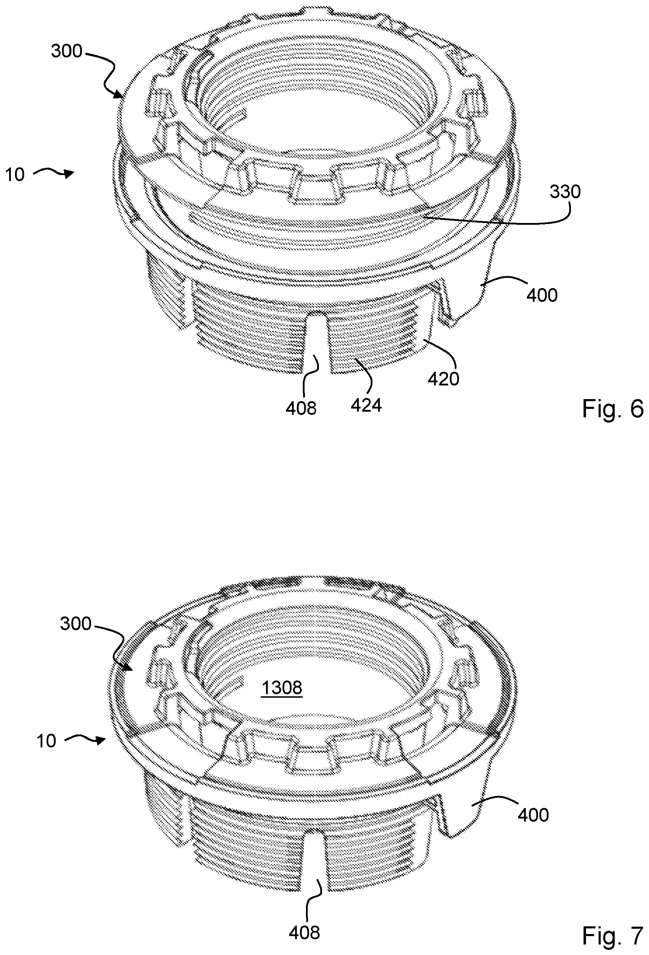

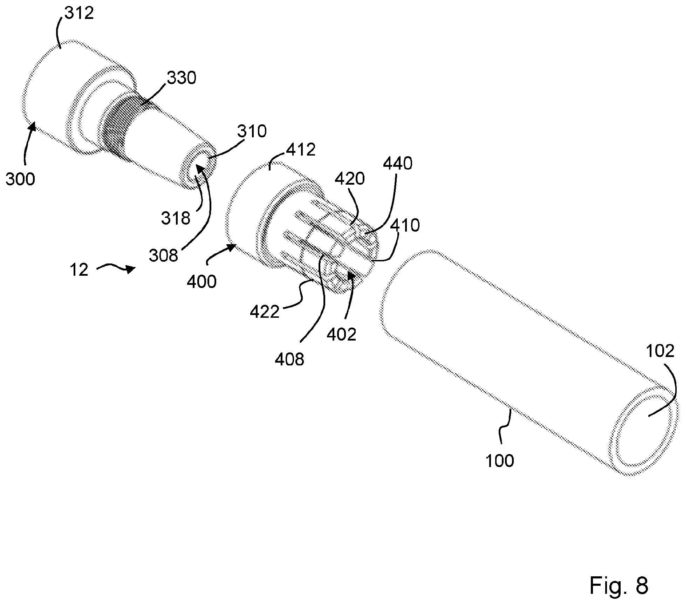

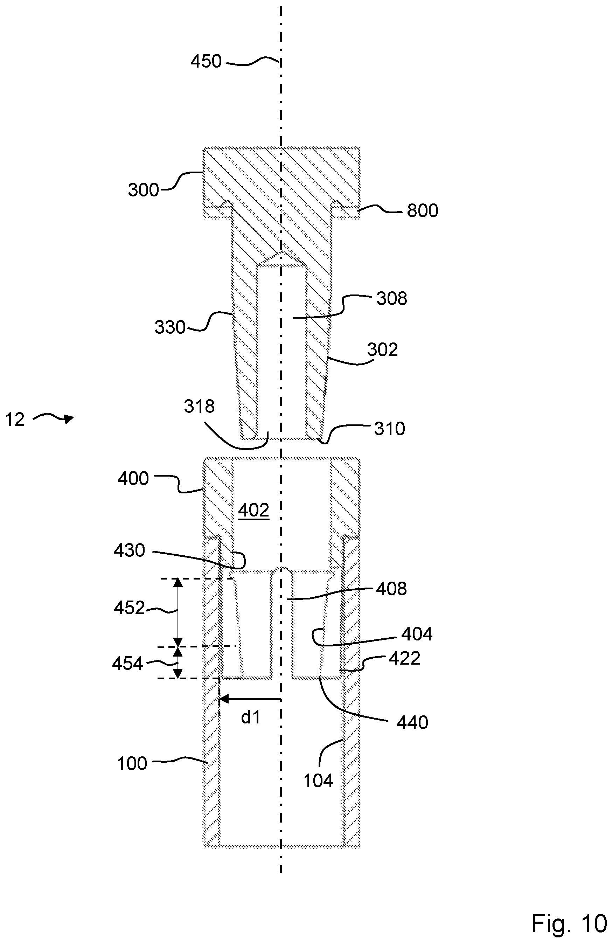

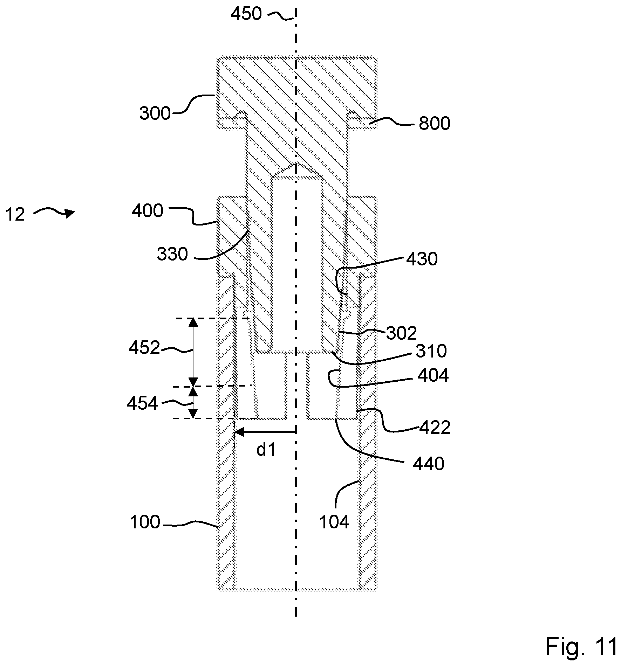

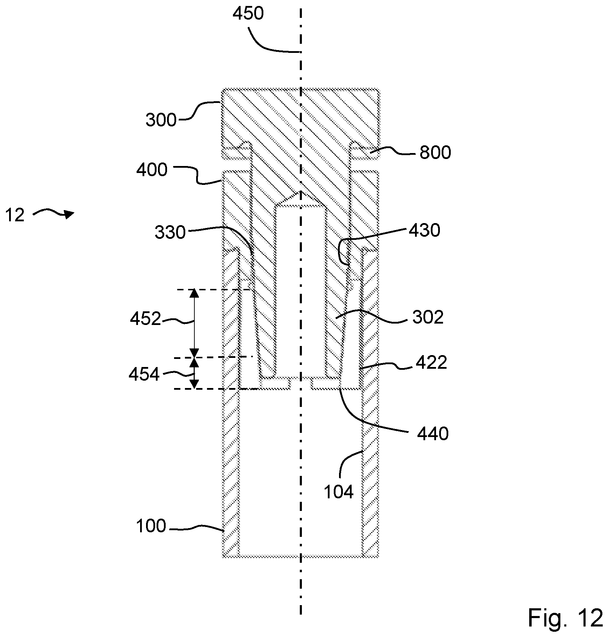

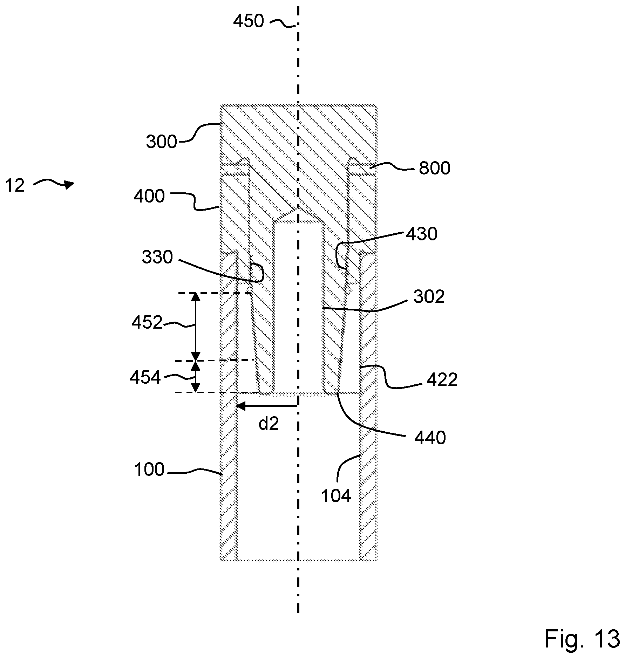

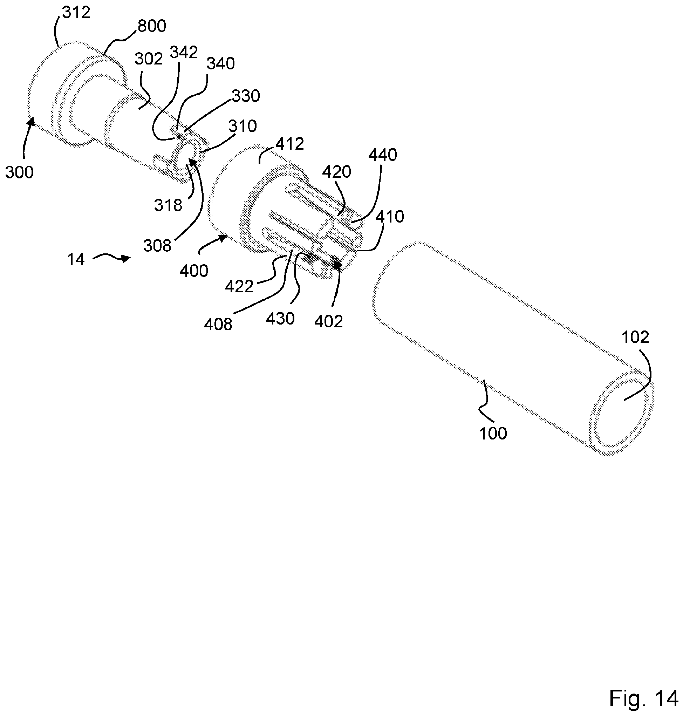

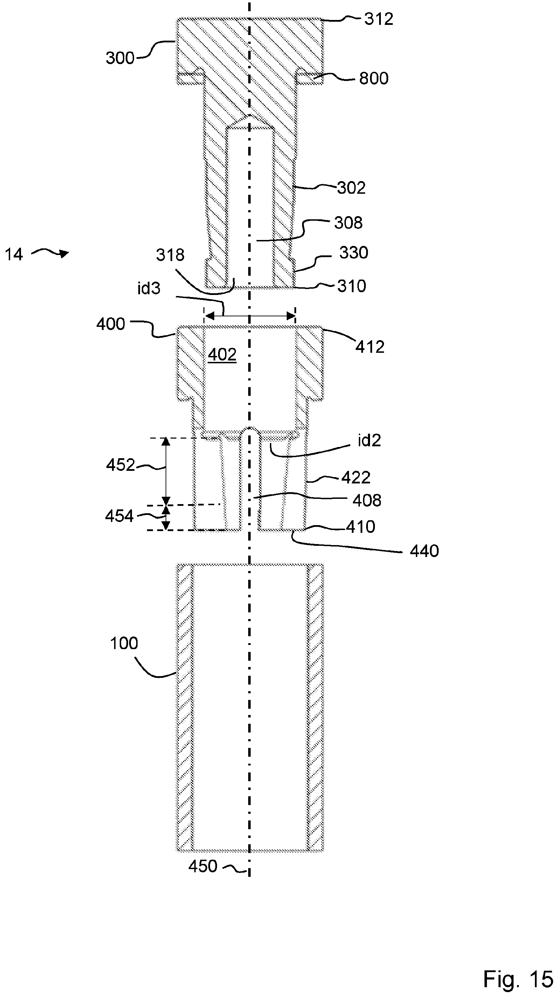

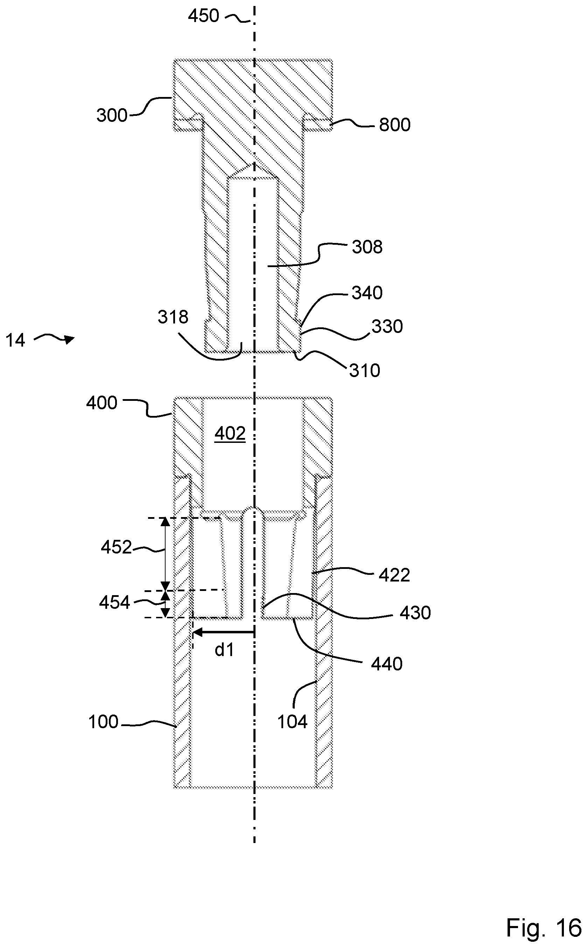

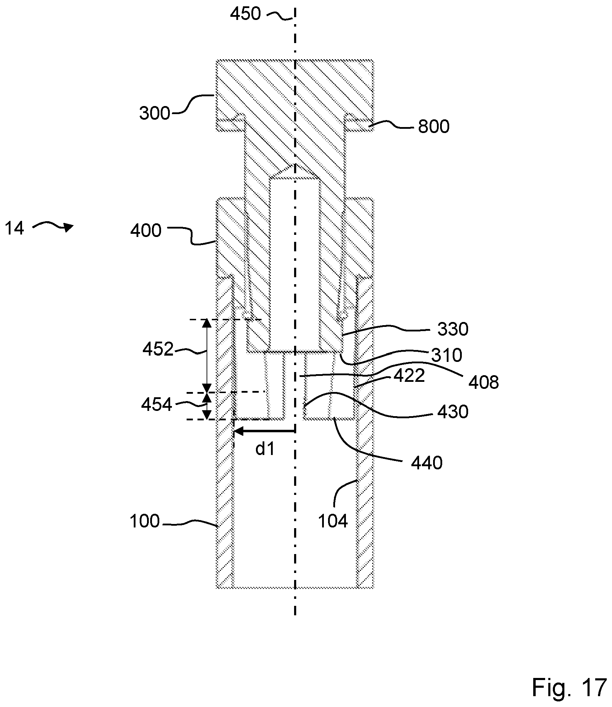

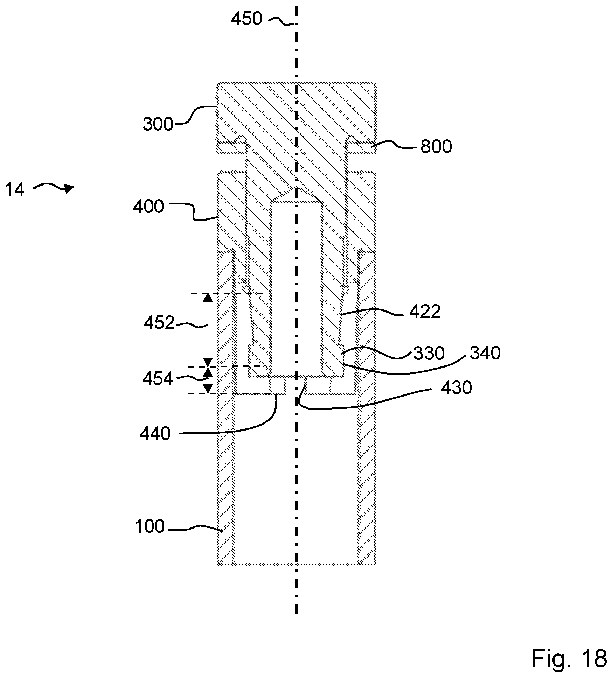

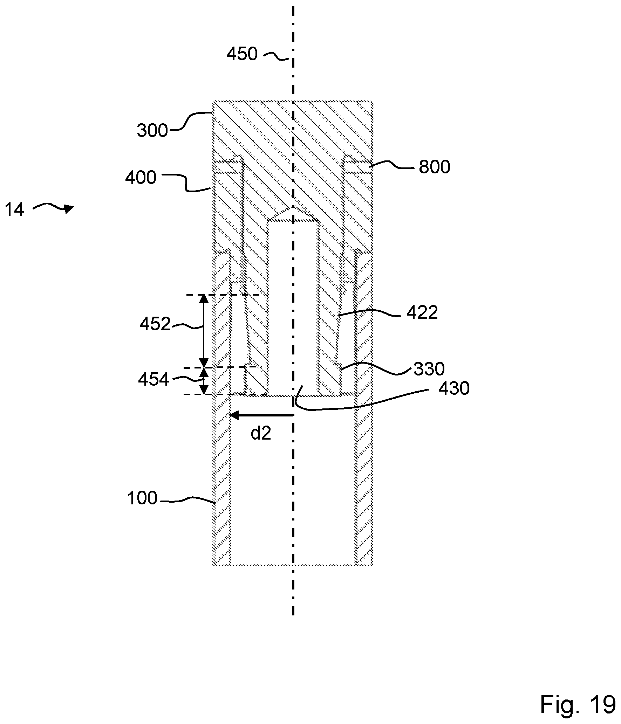

Figures 1 to 7 illustrate a first example 10 of a connector assembly according to a present disclosure. Figures 8 to 13 illustrate a second example 12 of a connector assembly according to a present disclosure. Figures 14 to 20 illustrate a third example 14 of a connector assembly according to a present disclosure. Although features of the different examples 10, 12, 14 vary, they share common features. The features which are common are referenced by use of the same reference numerals.

In all of the examples of the present disclosure, the connector assembly 10, 12, 14 comprises a core element 300 having an outer engagement surface 302 (e.g. a radially outer engagement surface 302) extending from a leading edge end 310 (e.g. leading edge end region 310) towards a trailing edge end 312.

The connector assembly 10, 12, 14 also comprises an engagement sleeve 400 extending from a leading edge end 410 to a trailing edge end 412. The engagement sleeve 400 defines a passage 402 having a central axis 450. The engagement sleeve passage 402 has an opening 406 at the trailing edge end 412. The engagement sleeve passage 402 may have an opening at the leading edge end 410.

The engagement sleeve opening 406 and engagement sleeve passage 402 are configured to receive at least part of the core element 300 extending from the leading edge end 310 of the core element 300.

The engagement sleeve 400 comprises an engagement member 420 having an outer surface 422 (e.g. a radially outer surface 422) configured for engagement with the cavity contact surface 104 of the first structural member 100. The engagement member 420 also comprises an inner surface 404 (e.g. a radially inner surface 404) for engagement with the outer engagement surface 302 of the core element 300. The engagement member 420 extends to a free end 440 at the leading edge end 410. That is to say, the engagement member 420 terminates at a free end 440 at the leading edge end 410.

The engagement member 420 may be termed a "leg" or "finger" as it extends from a base part (e.g. ring) of the engagement sleeve 400 (which defines the trailing edge end 412) to a free end 410. The engagement member 420 may be resiliently flexible. The engagement member 420 may be resiliently deformable. The engagement member 420 is pivotable relative to the base part (e.g. ring) of the engagement sleeve 400. The engagement member 420 may be flexible (e.g. bendable) along its length.

In some examples, for example as shown in figures 1 to 7, the outer surface 422 of the engagement member 420 of the engagement sleeve 400 is provided with at least one engagement tooth 424 and is configured to press into the cavity contact surface 104 of the first structural member 100.

In other examples, as shown in figures 8 to 24, the outer surface 422 of the engagement member 420 of the engagement sleeve 400 is smooth, and is configured to press against, but not dig into, the cavity contact surface 104 of the first structural member 100.

In some examples, as shown in figures 8 to 24, the core element 300 may be configured to substantially close (and in some examples seal) the engagement sleeve passage 402. In some examples, the core element 300 may be solid. The core element 300 may define an opening 318 at the leading edge end 310, a passage 308 extending some, but not all, of the way to the trailing edge end 312.

In other examples, as shown in figures 1 to 8, the core element 300 defines an opening 306 at the trailing edge end 312 and an opening 318 at the leading edge end 310, a passage 1308 extending therebetween. The passage 1308 may be configured for receiving and engaging with a second member 200, for example a second structural member or accessory 200. For example the passage 1308 may be configured to mount the end of a post or to receive an adapter which in turn is fixed to another post.

Alternatively as shown in figure 1, the core element 300 may comprise further engagement features for co-operative engagement with engagement features on the second structural member or accessory 200. Thus the second structural member or accessory 200 may locate on and lock to the part of the core element 300 which extends from the sleeve 400.

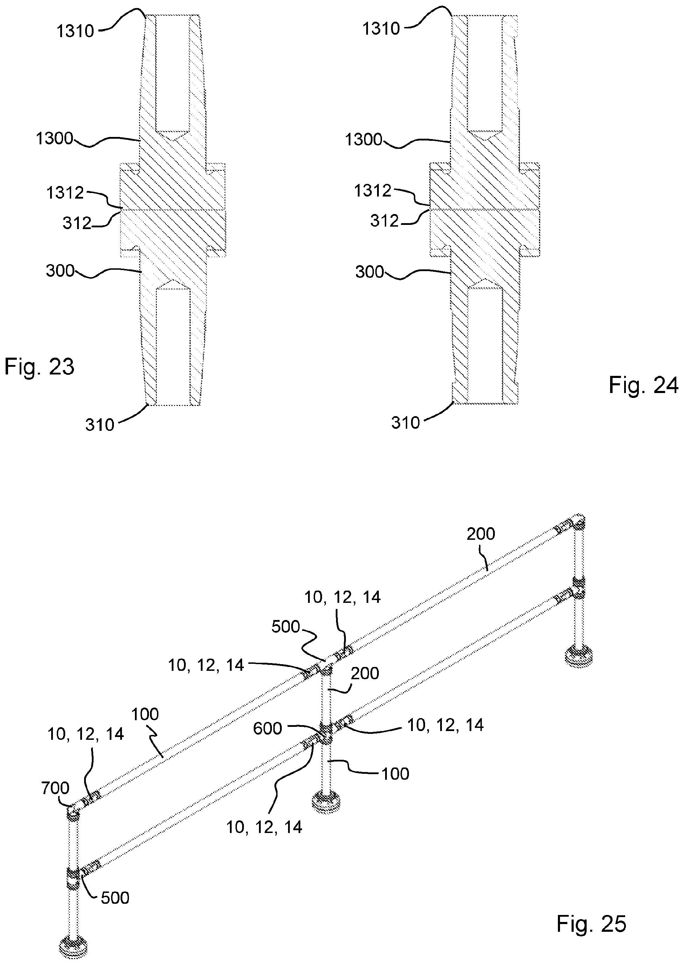

In the second example of connector assembly 12 shown in figures 8 to 13 and the third example connector assembly 14 shown in figures 14 to 22, a second structural member or accessory 200 may be attached to the trailing edge end 312 of the core element 300. For example the second structural member or accessory 200 may be glued/bonded to the trailing edge end 312, or an engagement feature may be provided on the trailing edge end 312 for the second structural member or accessory 200 to be attached to. As shown in figures 23, 24 the engagement feature may be provided as a second core element 1300, identical to the core element 300 as herein described, joined at their respective trailing edge ends 312, 1312 and extending to their respective leading edge ends 310, 1310. In such examples, the structural member or accessory 200 is attachable and fixable to the second core element 1300 in the same way as the first structural member 100 is attachable and fixable to the first core element 300.

The inner surface 404 of the engagement member 420 has a **first region 452** which extends in a direction away from the opening 406 to a **second region 454,** and the **second region 454** extends from the end of the **first region 452** to a free end 440 defined by the leading edge end 410. That is to say, the **second region 454** extends from the free end 440 defined by the leading edge end 410 of the engagement member 420 to where it meets the end of the **first region 452,** and the **first region 452** extends at least part of the way towards the opening 406 of the engagement sleeve passage 402 (i.e. towards the trailing edge end 412).

The engagement sleeve 400 comprises additional engagement members (e.g. fingers/legs) 420 which may be of the same or similar configuration as hereinbefore described. The plurality of engagement members 420 may be spaced apart around central axis 450 with a slot 408 therebetween. Each engagement member 420 has an outer surface 424 (e.g. a radially outer surface) for engagement with the cavity 102 contact surface 104, an inner surface 404 (e.g. radially inner surface) for engagement with the core element 300 outer surface 302 and a free end 440 at the leading edge end 410. The free ends 440 may be spaced apart from one another around the central axis 450 with the slot 408 therebetween. The engagement members 420 may be free to move relative to one another. A clearance may be maintained between the free ends 440.

The inner surface 404 of the engagement sleeve 400 and outer engagement surface 302 of the core element 300 are configured such that core element 300 is moveable (i.e. translatable) relative to the **first region 452** and the **second region 454** of the inner surface 404 of the engagement sleeve 400. That is to say, the outer engagement surface 302 of the core element 300 is configured to move (i.e. translate) along the **first region 452** and the **second region 454** of the inner surface 404 of the engagement sleeve 400.

The inner surface 404 each engagement sleeve engagement member 420 may be smooth. The outer engagement surface 302 of the core element 300 may be smooth. The outer engagement surface 302 of the core element 300 is configured to slide along the **first region 452** and the **second region 454** of the inner surface 404 of the engagement sleeve 400. Hence because the inner surface 404 of each engagement sleeve engagement member 420 and outer engagement surface 302 of the core element 300 are smooth, the outer engagement surface 302 of the core element 300 may be entered into, and removed from, the engagement sleeve passage 402, and translate relative to the inner surface of the engagement sleeve 400, including the inner surface 404 of each engagement sleeve engagement member 420, without the material of one part digging (e.g. cutting) into the material of the other part.

The features of the core element 300 and engagement sleeve 400 may be sized relative to each other such that a clearance fit may be maintained between the inner surface 404 of the engagement member 420 and the outer engagement surface 302 of the core element 300 when the leading edge end 310 of the core element 300 is located along (e.g. adjacent) the **first region 452** of the inner surface 404 of the engagement member 420.

Hence when the leading edge end 310 of the core element 300 is in the **second region 454** of the engagement sleeve 400, the whole of the radially inner surface 404 of each engagement member 402 of the engagement sleeve 400 may be in contact with co-operating area of the core element outer engagement surface 302.

The features of the core element 300 and engagement sleeve 400 may be sized relative to each other such that there is an interference fit between the inner surface 404 of the engagement member 420, and the outer engagement surface 302 of the core element 300 when the leading edge end 310 of the core element 300 is engaged with the **second region 454** of the inner surface 404 of the engagement member 420.

The core element 300 and engagement sleeve 400 may be configured such that, with the engagement sleeve 400 entered in the cavity 102 of the first structural member, when the connector assembly 10, 12, 14 is in a **first configuration** in which the engagement sleeve 400 is slideable relative to the cavity 102 contact surface 104 of the first structural member, the leading edge end 310 of the core element 300 is located along (e.g. adjacent) the **first region 452** of the engagement member 420. The core element 300 and engagement sleeve 400 may also be configured such that when the connector assembly 10, 12, 14 is in a **second configuration** in which the engagement sleeve 400 is locked relative to the first structural member 100, the leading edge end 310 of the core element 300 is engaged with the **second region 454** of the engagement member 420. That is to say, the engagement sleeve 400 is freely moveable (e.g. slideable) relative to the cavity 102 contact surface 104 of the first structural member until the leading edge end 310 of the core element 300 outer surface 302 is engaged with the **second region 454** of the engagement member 420.

The core element 300 and engagement sleeve 400 are configured such that when the leading edge end 310 of the core element 300 moves (e.g. slides) from the **first region 452** to along at least part of the **second region 454** of the inner surface 404 of the engagement member 420, the outer surface 422 of the engagement member 420 is urged to engage with the cavity contact surface 104 of the first member 100 until the connector assembly 10, 12, 14 is in the **second configuration.**

The core element 300 and engagement sleeve 400 may be configured such when the core element 300 is moved in a **first direction** along the engagement sleeve passage 402 (e.g. parallel to the central axis 450), the outer engagement surface 302 of the core element 300 engages with the inner engagement surface 404 of the engagement member 420 to change the connector assembly 10, 12, 14 from the **first configuration** to the **second configuration.** The **first direction** is in the direction from the trailing edge end 412 to the leading edge end 410 of the engagement sleeve 400.

The core element 300 and engagement sleeve 400 may be further configured such when the core element 300 is moved in a **second direction** along the engagement sleeve passage 402 (e.g. parallel to the central axis 450), the outer engagement surface 302 of the core element 300 disengages with the inner engagement surface 404 of the engagement sleeve 400 member to change the connector assembly 10, 12, 14 from the **second configuration** to the **first configuration** to thereby allow the engagement sleeve 400 to slide along the cavity contact surface 104 of the first structural member 100. The **second direction** is in the direction from the leading edge end 410 to the trailing edge end 412 of the of the engagement sleeve 400.

That is to say, the core element 300 and engagement sleeve 400 are configured such that when the leading edge end 310 of the core element 300 enters (i.e. starts to move along) the **second region 454** of the engagement member 420 in the **first direction,** the outer engagement surface 302 of the core element 300 is urged to engage with the inner engagement surface 404 of engagement member 420 such that outer surface 422 of the engagement sleeve engagement member 420 is urged to engage with the cavity contact surface 104 of the first member 100.

The core element 300 and engagement sleeve 400 are configured such that when the leading edge end 310 of the core element 300 moves from being located along (e.g. adjacent) the **first region 452** of the inner surface 452, to being engaged with the **second region 454** of the inner surface 404 of the engagement member 420, the outer engagement surface 302 of the core element 300 is urged to engage with the inner surface 404 of the engagement member 420 such that the outer surface 422 of the engagement member 420 is urged to engage with the cavity contact surface 104 of the first member 100 until the connector assembly 10, 12, 14 is in the **second configuration.**

The core element 300 and engagement sleeve 400 are configured such that as the leading edge end region 310 of the core element 300 moves from being engaged with the **second region 454** of the engagement member 420 to being located along the **first region 452** of the engagement member 420 (i.e. is moved in the **second direction),** the outer engagement surface 302 of the core element 300 disengages with the inner engagement surface 404 of the engagement sleeve 400 so as to permit the engagement sleeve engagement member 420 to disengage with the cavity contact surface 104 of the first member 100, and such that the connector assembly 10, 12, 14 transitions from the **second configuration** to the **first configuration** to thereby allow the engagement sleeve 400 to slide along the cavity contact surface 104 of the first structural member 100.

The core element 300 outer engagement surface 302 may increase in diameter from the leading edge end 310 towards the trailing edge end 312, terminating in a region 370 of constant diameter. That is to say, the core element 300 outer engagement surface 302 has a frustoconical region 360 extending from the leading edge end 310 to a region 370 of constant diameter, which extends towards the trailing edge end 312. The act of the core element 300 moving along the inside of the engagement sleeve 400, and in particular along the inside of the engagement member 420, causes the engagement member 420 to be forced away from the central axis 450.

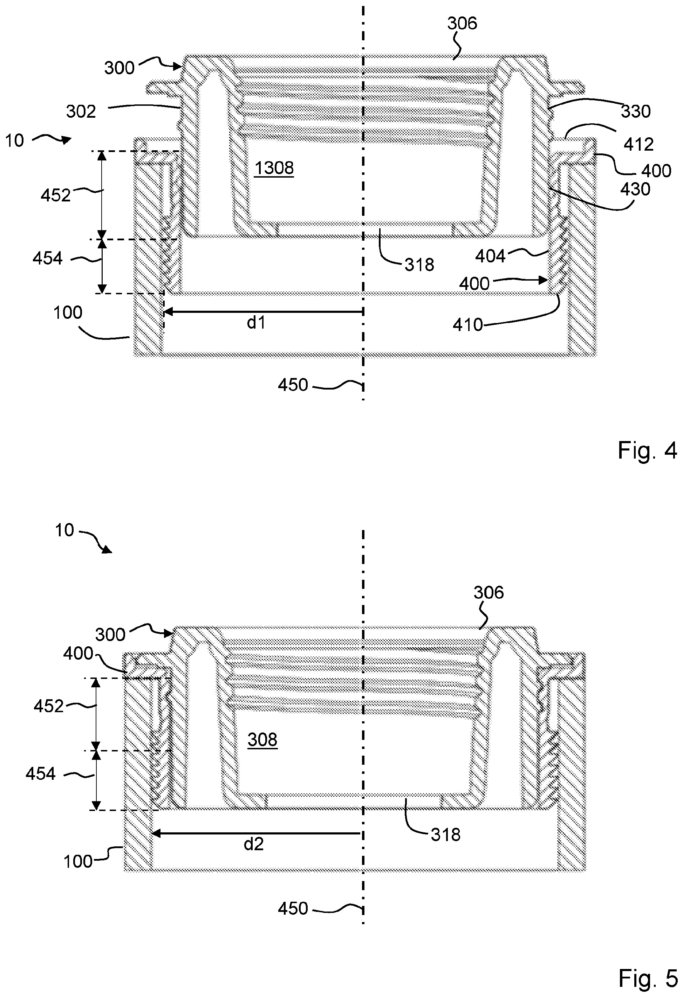

As illustrated in figures 4, 9, 10, 11, 16, 17, in the first configuration of the connector assembly 10, 12, 14 the engagement member outer surface 422 has a frustoconical region 460, which increases in diameter from the leading edge end 410 from a first diameter to a second diameter. A region 470 of constant diameter extends from the second diameter end of the frustoconical region 460 towards the trailing edge end 412. Hence the surface defined by the constant diameter region 470 extends substantially parallel to the central axis 450. The first diameter may have a value in the range of 0.90 to 0.98 of the second diameter.

As illustrated in figures 4, 10, 11, 16, 17, in the **first configuration** of the connector assembly 10 the free end 440 of the engagement member 420 is a **first distance d1** from the central axis 450. In the **first configuration** of the connector assembly 10, 12, 14 the distance between the engagement member outer surface 422 and the central axis 450 varies along the length of the engagement member outer surface 422.

As illustrated in figures 5, 13, 19, in the second configuration of the connector assembly 10, 12, 14 at least part of the engagement member 420 is forced away from the central axis 450 by the core element 300 such that the free end 440 of the engagement member is a **second distance d2** from the central axis 450, the **second distance d2** being greater than the **first distance d1.** That is to say, in the **second configuration** of the connector assembly 10, 12, 14 the free end 440 of the engagement member 420 is a **second distance d2** from the central axis 450, the **second distance d2** being greater than the **first distance d1.** The second **distance d2** may be at least equal to the internal radius of the cavity 102 of the structural member 100.

In the **second configuration** of the connector assembly 10, 12, 14, the distance between the engagement member outer surface 422 and the central axis 450 may be substantially constant, since in the **second configuration** the engagement member outer surface 422 is pressed against the contact surface 104 of the structural member 100. In the **second configuration** of the connector assembly 10, 12, 14, the distance between the engagement member outer surface 422 and the central axis 450 may be greatest at the free end 440 and reduce in value along at least part of the engagement member outer surface 422.

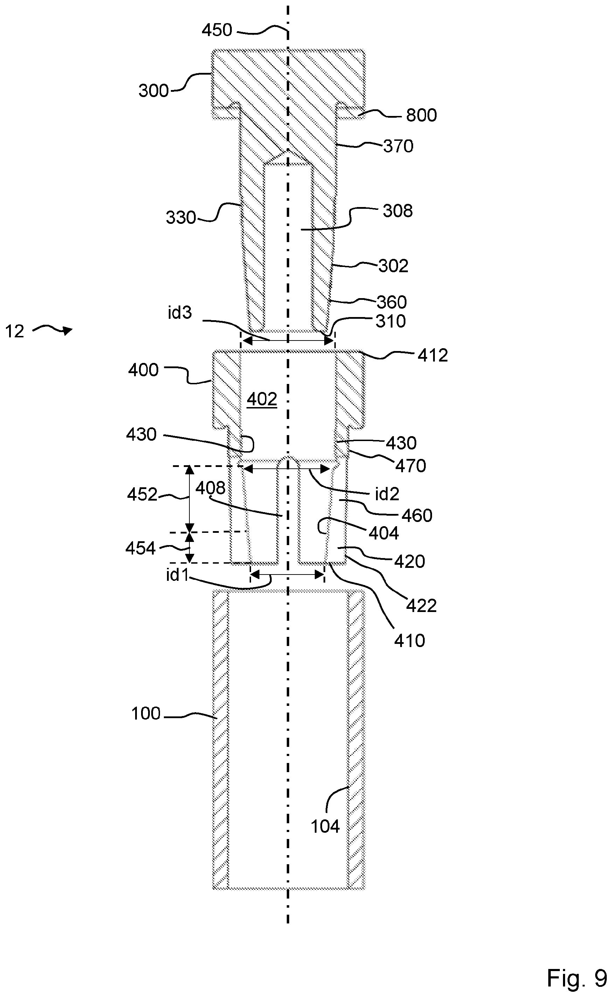

As illustrated in figure 9 (and applicable to the other examples) in the **first configuration** the engagement member inner surface 404 may increase in diameter from id1 to id2 from the leading edge end 410 along at least part of the engagement member inner surface 404 towards a region of constant diameter id3, and the region of constant diameter extends from the id2 diameter to the trailing edge 412.

Hence, when at least part of the core element 300 is entered and moved along the passage 402 of the sleeve member 400, and the core element 300 outer engagement surface 302 pushes against at least part of the engagement member inner surface 404, the frustoconical shape of the core element 300 outer engagement surface 302 and/or engagement member inner surface 404 result in an interaction such that the further that the core element 300 is pushed into the passage 402 towards the free end 440 of the engagement member 400, the free end 440 of the engagement member 400, and hence at least part of the engagement member outer surface 422, is urged away from the central axis 450. In this way, in practice, at least part of the engagement member outer surface 422 engages with the contact surface 104 of the structural member 100 as the core element 300 is pushed along the passage 402.

In each example of the connector assembly 10, 12, 14 of the present disclosure, the core element 300 may be provided with a first locking feature 330 and/or the engagement sleeve 400 may be provided with a second locking feature 430. The first locking feature 330 and second locking feature 430 may be configured to engage with one another to lock the engagement sleeve 400 and core element 300 together and may be configured to disengage from one another so the engagement sleeve 400 and core element 300 are separable (i.e. can move, for example slide, relative to one another so the assembly may be taken apart).

The first locking feature 330 and second locking feature 430 are positioned on the core element 300 and sleeve 400 respectively such that as the leading edge 310 of the core element 300 is pushed along the **first region 452** of the passage 402 of the sleeve 400 in the direction from the trailing edge end 412 to the leading edge end 410, and before the first locking feature 330 engages with the second locking feature 430, the connector assembly 10, 12, 14 is in the **first configuration.**

The first locking feature 330 and second locking feature 430 are positioned on the core element 300 and sleeve 400 respectively such that as and/or just after the leading edge end 310 of the core element 300 engages with the **second region 454** of the engagement sleeve 400, the first locking feature 330 engages with the second locking feature 430.

The transition from the connector assembly 10, 12, 14 from **first configuration** to the **second configuration** starts when the first locking feature 330 and second locking feature 430 engage. The **second configuration** is achieved by the act of locking first locking feature 330 with the second locking feature 430

In the examples shown in Figures 1 to 7 with respect to the first example connector assembly 10 and figures 8 to 13 of the second example connector assembly 12, the first locking feature 330 is provided on an outer surface (e.g. radially outer surface) of the core element 300, between the section of the radially outer engagement surface 302 which engages with the radially inner surface 404 of the engagement member 420 and the trailing edge end 312 of the core element 300. The second locking feature 430 is provided on the inner surface (e.g. radially inner surface) of the engagement sleeve 400, between the radially inner engagement surface 404 of the engagement member 420 and the trailing edge end 412 of the engagement sleeve 400.

The first locking feature 330 on the core element 300 may be provided as a first screw thread. The second locking feature 430 on the engagement sleeve 400 may be provided as a second screw thread. The first screw thread and second screw thread are compatible with one another. The core element 300 and engagement sleeve 400 are rotatable relative to one another around the central axis 450 to engage and disengage the first locking feature 330 and second locking feature 430. The act of turning the core member 300 and sleeve member 400 relative to one another around the central axis 450 with the locking features 330, 430 engaged causes movement of the core member 300 along the passage 402 of the sleeve. The screw thread may be a fourstart thread.

When the first locking feature 330 and second locking feature 430 are engaged, the core element 300 and sleeve member 400 are prevented from sliding relative to one another along the central axis 450.

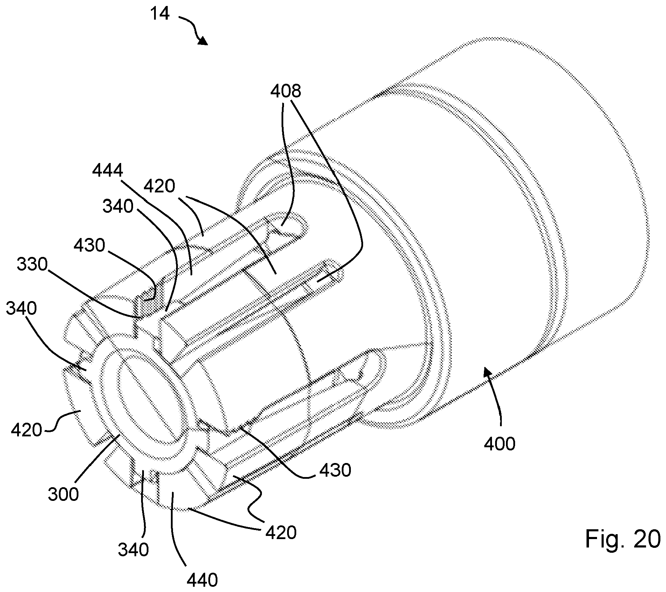

In the examples shown in Figures 14 to 22 with respect to the third example connector assembly 14, and as best shown in Figures 20 to 22, the first locking feature 330 is provided on the outer surface 302 (e.g. radially outer surface) of the core element 300 and comprises a mount 340 (e.g. an extension or pedestal) which extends outwards from (e.g. radially outward from), and extends along the outer engagement surface 302 from the core element 300 leading edge 310 part of the way towards the core element 300 trailing edge 312. A plurality of mounts 340 may be provided, spaced apart around the outer engagement surface 302 of the core element 300 leading edge 310.

In the example shown in figures 14 to 22, in which a plurality of engagement members 420 are provided, spaced apart around the boundary/circumference of the sleeve 400, the or each mount 340 is sized to fit in the slot 408 defined between two adjacent engagement members 420. The outer diameter defined by the outer surface (e.g. radially outer surface) of the mounts 340 is no more than the diameter of the passage 402, so that the mounts 340 can pass through the passage 402 and then enter the slots 408 between the engagement members 420.

The mount 340 has a side surface 344 from which extend teeth 342 to extend in a first direction (e.g. a first circumferential direction). The second locking feature 430 is provided on a side 444 of the engagement sleeve 400 engagement member 420 and comprises teeth 442 which extend in a second direction (e.g. second circumferential direction) opposite to the first circumferential direction.

As best shown in figures 20 to 22, the first direction and second direction are at right angles to the direction defined between the leading edge end 410 and trailing edge end 412 by the central axis 450. That is to say, in an example in which the core element 300 and sleeve member 400 are circular in cross-section, the first direction extends a first way (e.g. clockwise or anticlockwise) around the central axis 450, and the second direction extends a second way (e.g. anti-clockwise or clockwise) around the central axis 450, in an opposite direction to the first direction.

The teeth 342 of the first locking feature 330 and teeth 442 of the second locking feature 430 may be configured for interlocking engagement such that when the teeth 342 of the first locking feature 330 and teeth 442 of the second locking feature 430 are engaged, the core element 300 and engagement sleeve 400 are locked together.

As best shown in figures 20 to 22, the teeth 342, 442 may be saw-tooth in nature, such that the gullet of the saw teeth 342 of the first locking feature 330 are sized to receive and locate the teeth 442 of the second locking feature 430 and such that the gullet of the saw teeth 442 of the second locking feature 430 are sized to receive and locate the teeth 342 of the first locking feature 330.

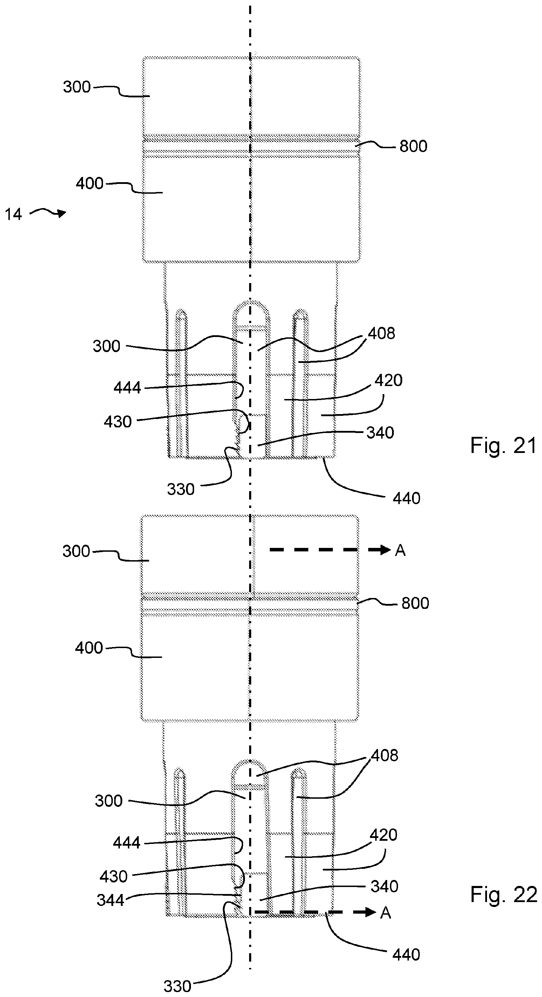

As shown in figure 21, the saw teeth 342, 442 may be orientated such that as the leading edge end 310 of the core element 300 translates towards and (optionally) beyond the leading edge end 410 of the engagement member 420 (i.e. in the **first direction),** the saw teeth 342 may slide over/past the saw teeth 442 (i.e. into and out of the gullet of the other set of teeth). However, the saw teeth 342, 442 may also be orientated such, after the teeth 342, 442 have engaged) that the if the leading edge end 310 of the core element 300 is urged to translate towards and trailing edge end 412 of the engagement member 420 (i.e. in the **second direction),** then the teeth 342, 442 lock together (i.e. because the teeth of one set of teeth 342, 442 are located in the gullets of the other set of teeth 342, 442) to prevent relative movement of the core element 300 and sleeve member 400.

As shown in figure 22, the core element 300 and engagement sleeve 400 may be disengaged by rotating the core element 300 and engagement sleeve 400 relative to one another (or rotating one of the core element 300 and engagement sleeve 400 relative to the other) such that the teeth 342 of the mount 340 can be lifted away from the teeth 442 of the engagement member 420. For example, as shown in figure 22, if the core element 300 is rotated around the central axis 450 in **direction A,** the mount 340 is moved away from the engagement member teeth 442.

As shown, the engagement sleeve 400 may comprise a plurality of engagement members (e.g. legs) 420 of the same configuration. The mounts 340 may be provided in only some of the slots 408 between the engagement members 420. Hence the mounts 340 may be provided in every second slot 408 between the engagement members 420 so that an engagement member 420 deflected by a mount 340 bends into the free space defined by a slot 408. That is to say, some of the engagement members 420 are configured to resiliently flex in a circumferential direction in response to a force being applied from the mounts 340.

Some of the engagement members 420 may be thinner than others. For example, the engagement members 420 on which teeth 442 are provided may be thicker than engagement members 420 which are configured to deflect when the mount 340 is pressed into them.

Thus the core element 300 and engagement sleeve 400 are rotatable relative to one another around the central axis 450 to disengage the first locking feature 330 and second locking feature 430.

As set out above, the connector assembly 10, 12, 14 according to the present disclosure may be provided with other components as a kit of parts. For example, as shown in the figures in relation to each of the examples, the kit of parts may comprise a first member 100 (e.g. a first structural member) which defines a cavity 102 with a contact surface 104, and an opening 106 to the cavity 102 to receive at least the leading edge end 410 of the engagement sleeve 400. The cavity 102 contact surface 104 for engagement with the sleeve engagement member 420 is of substantially constant cross-sectional area and/or constant diameter.

The kit of parts may further comprise a second member 200 (e.g. structural member and/or accessory). Hence when assembled the second member 200 may extend from and/or be coupled to the core element 300, such that the first member 100 is coupled to the second member 200 via the connector assembly 10, 12, 14.

The first member 100 and/or second member 200 may be provided as a hollow tube and/or pipe. The first member 100 and/or second member 200 may be provided as a hollow post or hollow rail.

The first member 100 and/or second member 200 define a cavity 102 with a contact surface 104, and an opening 106 to the cavity 102. In examples in which the first member 100 and second member 200 are hollow tubes/pipes, the opening 106 may be provided at an end of the tube/pipe. In examples in which the first member 100 and second member 200 are hollow tubes/pipes having a substantially constant diameter along their length and/or at least towards their opening end, with a wall having a constant thickness along their length and/or at least towards their opening end, the cavity 102 may be defined by the inner surface of the tube/pipe wall.

Hence, for example, if circular, the diameter (e.g. width) of the cavity contact surface 104 for engagement with the sleeve engagement member 420 may be **at most** the same as the outer diameter of the sleeve engagement member outer surface 422.

The connector assembly and/or kit of parts according to the present disclosure may form at least part of:
a. a fencing assembly
b. a machine guarding assembly
c. a hand rail assembly
d. a balustrade assembly
e. a decking assembly
f. a climbing frame assembly
g. a playground assembly
h. a temporary support structure assembly
i. a scaffold assembly
j. a barrier assembly;
k. a post assembly; or
l. a support structure for temporary cover systems e.g. a pagodas , gazebos, tent.

Figure 25 shows an example structure constructed using a kit of parts according to the present disclosure. Any of the example of connector assemblies 10, 12, 14 according to the present disclosure may be combined with T joints 500, cross joints 600 and/or L joints 700 to assemble a structure from structural members 100, 200. For example a connector assembly 10, 12, 14 may join a first structural member (e.g. a tube) 100 to a T joint, the T joint links to further connector assemblies which link to further structural members 100, 200, and/or the T joint links directly to further structural members 100, 200.

The second member 200 may be an end cap or mount for an accessory. The engagement sleeve 400 may provide fluid communication between the first member 100 cavity 102 to an external surface of the cap or mount (for example, when assembled, to provide a vent from the inside of the structural member to the space around the assembly).

A resilient washer or seal 800 may be provided between the core element 300 and trailing edge end 412 of the sleeve 400. This may be provided as a resilient member to ensure the core element 300 can tighten down onto the sleeve 400 and to ensure there is a force on the locking features between the core element 300 and sleeve 400 to keep the locking features engaged.

In operation, an engagement sleeve 400 may be first entered in the cavity 102 (e.g. end of pipe, tube that forms a structural member 100, 200). The engagement member(s) 420 slide into the cavity 102, along the contact surface 104. The core element 300 is then entered in the opening 406 of the sleeve 400 to pass along the passage 402. As described above, as the core element 300 travels along the passage 402 and engages with the engagement member 420, the inner surface 404 of the engagement member 420 is deflected outwards and the engagement member outer surface 422 engages with the contact surface 104 of the structural member 100 to fix them together.

The core element 300 may be locked to the engagement sleeve 400 by the locking means 330, 430 to thereby prevent the core element 300 sliding out of the engagement sleeve 400, and thereby ensuring the core element 300 remains locked to the engagement sleeve 400.

When required, the core element 300 may be unlocked from the engagement sleeve 400, and removed from the sleeve 400 by reversing the assembly process. With the core element 300 removed, the engagement member(s) 420 are free to deflect inwardly and hence remove the engagement between the engagement members 420 and the structural member contact surface 104.

Hence there is provided a connector assembly and a kit of parts for a structure which provides significant advantages over examples of the prior art.

The connector assembly comprises only two parts which may be fitted to the structural members in series (i.e. one at a time). This means a single user can easily make the connection, and thus building a structure using the connector assembly of the present disclosure can be done with fewer people.

Since only two parts are required, the sleeve 400 and core element 300, less manufacturing processes and materials are required to make the parts of the assembly, thereby simplifying manufacturing and shipping.

Since the connection mechanism between the core element 300 and sleeve 400 also results in the engagement of the sleeve to the structural member, a user performs fewer steps to achieve the build. Having only two parts to work with also means that a user is less likely to make any errors during the build.

Since fixing elements (for example screws and bolts) are not required, there is less chance of the parts becoming damaged (for example by cross threading) during build.

## Claims

1. A connector assembly (10, 12, 14) for engagement with a first member (100), wherein the first member (100) defines a cavity (102) with a contact surface (104), and an opening (106) to the cavity (102); the connector assembly (10, 12, 14) comprising:
a core element (300) having an outer engagement surface (302) extending from a leading edge end (310) towards a trailing edge end (312);
an engagement sleeve (400) extending from a leading edge end (410) to a trailing edge end (412), the engagement sleeve (400) defining a passage (402) having a central axis (450), wherein the engagement sleeve passage (402) has an opening (406) at the trailing edge end (412);
the engagement sleeve opening (406) and engagement sleeve passage (402) are configured to receive at least part of the core element (300) extending from the leading edge end (310) of the core element (300);
the engagement sleeve (400) comprising:
an engagement member (420) having an outer surface (422) and an inner surface (404);
the outer surface (422) of the engagement member (420) configured for engagement with the contact surface (104) of the first member (100);
the inner surface (404) of the engagement member (420) having a **first region (452)** and **a second region (454);** the **second region (454)** extending from a free end (440) defined by the leading edge end (410) to the end of the **first region (452),** and the **first region (452)** extending towards the opening (406) of the engagement sleeve passage (402);
the inner surface (404) of the engagement member (420) and the outer engagement surface (302) of the core element (300) configured to be slideable relative to each other in the **first region (452)** and the **second region (454);**
the core element (300) and engagement sleeve (400) are configured such that, with the engagement sleeve (400) entered in the cavity (102) of the first structural member:
the connector assembly (10, 12, 14) is operable to be in a **first configuration** in which the engagement sleeve (400) is slideable relative to the cavity (102) contact surface (104) of the first structural member when the leading edge end (310) of the core element (300) is located along the **first region (452)** of the engagement member (420); and
the connector assembly (10) is operable to be in a **second configuration** in which the engagement sleeve (400) is locked relative to the first structural member (100) when the leading edge end (310) of the core element (300) is engaged with the **second region (454)** of the engagement member (420).

2. A connector assembly (10, 12, 14) as claimed in claim 1 wherein the core element (300) and engagement sleeve (400) are configured such that when the leading edge end (310) of the core element (300) slides along at least part of the **second region (454)** of the inner surface (404) of the engagement member (420), the outer surface (422) of the engagement member (420) is urged to engage with the cavity contact surface (104) of the first member (100) until the connector assembly (10) is in the **second configuration.**

3. A connector assembly (10, 12, 14) as claimed in claim 1 or claim 2 wherein:
when the leading edge end (310) of the core element (300) is located along the **first region (452)** of the inner surface (404) of the engagement member (420), a clearance fit is maintained between the inner surface (404) of the engagement sleeve (400) and the outer engagement surface (302) of the core element (300);
when the leading edge end (310) of the core element (300) is engaged with the **second region (454)** of the inner surface (404) of the engagement member (420), there is an interference fit between the inner surface (404) of the engagement sleeve (400) and the outer engagement surface (302) of the core element (300).

4. A connector assembly (10, 12, 14) as claimed in any one of claims 1 to 3, wherein the core element (300) and engagement sleeve (400) are configured such that as the leading edge end (310) of the core element (300) moves from being engaged with the **second region (454)** of the engagement member (420) to being located along the **first region (452)** of the engagement member (420), the outer engagement surface (302) of the core element (300) disengages with the inner engagement surface (404) of the engagement sleeve (400) so as to permit the engagement sleeve engagement member (420) to disengage with the cavity contact surface (104) of the first member (100), and such that the connector assembly (10) transitions from the **second configuration** to the **first configuration** to thereby allow the engagement sleeve (400) to slide along the cavity contact surface (104) of the first structural member (100).

5. A connector assembly (10, 12, 14) as claimed in any one of claims 1 to 4 wherein:
in the **first configuration** the free end (440) of the engagement member (420) is a first distance (d1) from the central axis (450); and
in the **second configuration** the free end (440) of the engagement member (420) is a second distance (d2) from the central axis (450),
the second distance (d2) being greater than the first distance (d1).

6. A connector assembly (10, 12, 14) as claimed in any preceding claim wherein:
in the **first configuration** the engagement member outer surface (422) increases in diameter from the leading edge end (410) from a first diameter to a second diameter and then extends towards the trailing edge end (412) with a region (470) of constant diameter.

7. A connector assembly (10, 12, 14) as claimed in any preceding claim wherein:
in the **first configuration** the engagement member inner surface (404) increases in diameter from the leading edge end (410) along at least part of the engagement member inner surface (404) towards the trailing edge end (412).

8. A connector assembly (10, 12, 14) as claimed in any preceding claim wherein:
the core element (300) is provided with a first locking feature (330);
the engagement sleeve (400) is provided with a second locking feature (430);
wherein the first locking feature (330) and second locking feature (430) are configured to engage with one another to lock the engagement sleeve (400) and core element (300) together; and configured to disengage from one another so the engagement sleeve (400) and core element (300) are separable.

9. A connector assembly (10, 12, 14) as claimed in claim 8 wherein:
the first locking feature (330) and the second locking feature (430) are positioned such that:
before the first locking feature (330) engages with the second locking feature (430), the leading edge end (310) of the core element (300) is in the **first region (452)** of the engagement sleeve (400) and the connector assembly (10, 12, 14) is in the **first configuration;** and
after the first locking feature (330) engages with the second locking feature (430), the leading edge end (310) of the core element (300) is in the **second region (454)** of the engagement sleeve (400).

10. A connector assembly (10, 12) as claimed in any one of claims 8, 9 wherein:
the first locking feature (330) is provided on an outer surface of the core element (300), between the section of the radially outer engagement surface (302) which engages with the radially inner surface (404) of the engagement member (420) and the trailing edge end (312) of the core element (300); and
the second locking feature (430) is provided on the inner surface of the engagement sleeve (400), between the radially inner engagement surface (404) of the engagement member (420) and the trailing edge end (412) of the engagement sleeve (400).

11. A connector assembly (10, 12) as claimed in claim 10 wherein:
a. the first locking feature (330) on the core element (300) is a first screw thread; and
b. the second locking feature (430) on the engagement sleeve (400) is a second screw thread.

12. A connector assembly (10, 12) as claimed in claim 10 or claim 11 wherein transition from the **first configuration** to the **second configuration** starts when the first locking feature (330) and second locking feature (430) engage.

13. A connector assembly (10, 12) as claimed in any one of claims 10 to 12 wherein:
the engagement sleeve engagement member (420) radially inner surface (404) is smooth;
and
the core element (300) outer engagement surface (302) is smooth;
such that when the leading edge end (310) of the core element (300) is in the **second region (454)** of the engagement sleeve (400), the radially inner surface (404) of the engagement member (420) is in contact with the core element outer engagement surface (302).

14. A connector assembly (14) as claimed in claims 8, 9 wherein:
the first locking feature (330) is provided on the outer surface (302) of the core element (300), and comprises a mount (340) which extends outwards from, and extends along, the outer engagement surface (302) from the core element (300) leading edge (310) towards the core element (300) trailing edge (312), and further comprises teeth (342) provided on a side of the mount to extend in a first circumferential direction;
the second locking feature (430) is provided on a side of the engagement sleeve (400) engagement member (420) and comprises teeth (442) which extend in a second circumferential direction opposite to the first circumferential direction;
the teeth (342) of the first locking feature (330) and teeth (442) of the second locking feature (430) being configured for interlocking engagement such that when the teeth (342) of the first locking feature (330) and teeth (442) of the second locking feature (430) are engaged, the core element (300) and engagement sleeve (400) are locked together.

15. A connector assembly (14) as claimed in claims 10 to 14 wherein:
the core element (300) and engagement sleeve (400) are rotatable relative to one another around the central axis (450) to engage and disengage the first locking feature (330) and second locking feature (430).

## Patentansprüche

1. Verbinderanordnung (10, 12, 14) für den Eingriff mit einem ersten Element (100), wobei das erste Element (100) einen Hohlraum (102) mit einer Kontaktfläche (104) und eine Öffnung (106) zum Hohlraum (102) definiert; wobei die Verbinderanordnung (10, 12, 14) Folgendes umfasst:
ein Kernelement (300) mit einer äußeren Eingriffsfläche (302), die sich von einem Vorderkantenende (310) zu einem Hinterkantenende (312) erstreckt;
eine Eingriffshülse (400), die sich von einem Vorderkantenende (410) zu einem Hinterkantenende (412) erstreckt, wobei die Eingriffshülse (400) einen Durchgang (402) mit einer Mittelachse (450) definiert, wobei der Eingriffshülsendurchgang (402) eine Öffnung (406) am Hinterkantenende (412) aufweist;
wobei die Eingriffshülsenöffnung (406) und der Eingriffshülsendurchgang (402) dazu ausgelegt sind, zumindest einen Teil des Kernelements (300) aufzunehmen, der sich vom Vorderkantenende (310) des Kernelements (300) erstreckt;
wobei die Eingriffshülse (400) Folgendes umfasst:
ein Eingriffselement (420) mit einer Außenfläche (422) und einer Innenfläche (404);
wobei die Außenfläche (422) des Eingriffselements (420) für den Eingriff mit der Kontaktfläche (104) des ersten Elements (100) ausgelegt ist;
wobei die Innenfläche (404) des Eingriffselements (420) einen ersten Bereich (452) und einen zweiten Bereich (454) aufweist; wobei sich der zweite Bereich (454) von einem durch das Vorderkantenende (410) definierten freien Ende (440) zu dem Ende des ersten Bereichs (452) erstreckt und sich der erste Bereich (452) zur Öffnung (406) des Eingriffshülsendurchgangs (402) erstreckt;
wobei die Innenfläche (404) des Eingriffselements (420) und die äußere Eingriffsfläche (302) des Kernelements (300) dazu ausgelegt sind, im ersten Bereich (452) und im zweiten Bereich (454) zueinander verschiebbar zu sein; wobei das Kernelement (300) und die Eingriffshülse (400) derart ausgelegt sind, dass, wenn die Eingriffshülse (400) in den Hohlraum (102) des ersten Strukturelements eingetreten ist:
die Verbinderanordnung (10, 12, 14) dazu funktionsfähig ist, sich in einer ersten Konfiguration zu befinden, in der die Eingriffshülse (400) in Bezug zur Kontaktfläche (104) des Hohlraums (102) des ersten Strukturelements verschiebbar ist, wenn sich das Vorderkantenende (310) des Kernelements (300) entlang des ersten Bereichs (452) des Eingriffselements (420) befindet; und
die Verbinderanordnung (10) dazu funktionsfähig ist, sich in einer zweiten Konfiguration zu befinden, in der die Eingriffshülse (400) in Bezug zum ersten Strukturelement (100) arretiert ist, wenn sich das Vorderkantenende (310) des Kernelements (300) mit dem zweiten Bereich (454) des Eingriffselements (420) im Eingriff befindet.

2. Verbinderanordnung (10, 12, 14) nach Anspruch 1, wobei das Kernelement (300) und die Eingriffshülse (400) derart ausgelegt sind, dass, wenn sich das Vorderkantenende (310) des Kernelements (300) entlang zumindest eines Teils des zweiten Bereichs (454) der Innenfläche (404) des Eingriffselements (420) verschiebt, die Außenfläche (422) des Eingriffselements (420) mit der Hohlraumkontaktfläche (104) des ersten Elements (100) in Eingriff gedrückt wird, bis sich die Verbinderanordnung (10) in der zweiten Konfiguration befindet.

3. Verbinderanordnung (10, 12, 14) nach Anspruch 1 oder Anspruch 2, wobei:
wenn sich das Vorderkantenende (310) des Kernelements (300) entlang des ersten Bereichs (452) der Innenfläche (404) des Eingriffselements (420) befindet, eine Spielpassung zwischen der Innenfläche (404) der Eingriffshülse (400) und der äußeren Eingriffsfläche (302) des Kernelements (300) gehalten wird;
wenn sich das Vorderkantenende (310) des Kernelements (300) mit dem zweiten Bereich (454) der Innenfläche (404) des Eingriffselements (420) im Eingriff befindet, eine Presspassung zwischen der Innenfläche (404) der Eingriffshülse (400) und der äußeren Eingriffsfläche (302) des Kernelements (300) besteht.

4. Verbinderanordnung (10, 12, 14) nach einem der Ansprüche 1 bis 3, wobei das Kernelement (300) und die Eingriffshülse (400) derart ausgelegt sind, dass, während sich das Vorderkantenende (310) des Kernelements (300) aus dem Eingriff mit dem zweiten Bereich (454) des Eingriffselements (420) heraus zur Positionierung entlang des ersten Bereichs (452) des Eingriffselements (420) bewegt, sich die äußere Eingriffsfläche (302) des Kernelements (300) von der inneren Eingriffsfläche (404) der Eingriffshülse (400) löst, um zuzulassen, dass sich das Eingriffshülseneingriffselement (420) von der Hohlraumkontaktfläche (104) des ersten Elements (100) löst und sodass die Verbinderanordnung (10) von der zweiten Konfiguration in die erste Konfiguration übergeht, um dadurch zuzulassen, dass sich die Eingriffshülse (400) entlang der Hohlraumkontaktfläche (104) des ersten Strukturelements (100) verschiebt.

5. Verbinderanordnung (10, 12, 14) nach einem der Ansprüche 1 bis 4, wobei:
in der ersten Konfiguration das freie Ende (440) des Eingriffselements (420) eine erste Entfernung (d1) von der Mittelachse (450) entfernt ist und
in der zweiten Konfiguration das freie Ende (440) des Eingriffselements (420) eine zweite Entfernung (d2) von der Mittelachse (450) entfernt ist,
wobei die zweite Entfernung (d2) größer ist als die erste Entfernung (d1).

6. Verbinderanordnung (10, 12, 14) nach einem der vorstehenden Ansprüche, wobei:
in der ersten Konfiguration der Durchmesser der ersten Eingriffselementaußenfläche (422) vom Vorderkantenende (410) von einem ersten Durchmesser zu einem zweiten Durchmesser zunimmt und sich anschließend mit einem Bereich (470) mit einem konstanten Durchmesser zum Hinterkantenende (412) erstreckt.

7. Verbinderanordnung (10, 12, 14) nach einem der vorstehenden Ansprüche, wobei:
in der ersten Konfiguration der Durchmesser der Eingriffselementinnenfläche (404) vom Vorderkantenende (410) entlang zumindest eines Teils der Eingriffselementinnenfläche (404) zum Hinterkantenende (412) zunimmt.

8. Verbinderanordnung (10, 12, 14) nach einem der vorstehenden Ansprüche, wobei:
das Kernelement (300) mit einem ersten Verriegelungsmerkmal (330) versehen ist;
die Eingriffshülse (400) mit einem zweiten Verriegelungsmerkmal (430) versehen ist;
wobei das erste Verriegelungsmerkmal (330) und das zweite Verriegelungsmerkmal (430) dazu ausgelegt sind, ineinander einzugreifen, um die Eingriffshülse (400) und das Kernelement (300) miteinander zu verriegeln; und dazu ausgelegt sind, sich voneinander zu lösen, sodass die Eingriffshülse (400) und das Kernelement (300) trennbar sind.

9. Verbinderanordnung (10, 12, 14) nach Anspruch 8, wobei:
das erste Verriegelungsmerkmal (330) und das zweite Verriegelungsmerkmal (430) derart positioniert sind,
dass:
bevor das erste Verriegelungsmerkmal (330) in das zweite Verriegelungsmerkmal (430) eingreift, sich das Vorderkantenende (310) des Kernelements (300) im ersten Bereich (452) der Eingriffshülse (400) befindet und sich die Verbinderanordnung (10, 12, 14) in der ersten Konfiguration befindet; und
nachdem das erste Verriegelungsmerkmal (330) in das zweite Verriegelungsmerkmal (430) eingreift, sich das Vorderkantenende (310) des Kernelements (300) im zweiten Bereich (454) der Eingriffshülse (400) befindet.

10. Verbinderanordnung (10, 12) nach einem der Ansprüche 8 oder 9, wobei:
das erste Verriegelungsmerkmal (330) an einer Außenfläche des Kernelements (300) zwischen dem Abschnitt der radial äußeren Eingriffsfläche (302), die in die radial innere Fläche (404) des Eingriffselements (420) eingreift, und dem Hinterkantenende (312) des Kernelements (300) vorgesehen ist; und
das zweite Verriegelungsmerkmal (430) an der Innenfläche der Eingriffshülse (400) zwischen der radial inneren Eingriffsfläche (404) des Eingriffselements (420) und dem Hinterkantenende (412) der Eingriffshülse (400) vorgesehen ist.

11. Verbinderanordnung (10, 12) nach Anspruch 10, wobei:
a. das erste Verriegelungsmerkmal (330) am Kernelement (300) ein erstes Schraubgewinde ist und
b. das zweite Verriegelungsmerkmal (430) an der Eingriffshülse (400) ein zweites Schraubgewinde ist.

12. Verbinderanordnung (10, 12) nach Anspruch 10 oder Anspruch 11, wobei der Übergang von der ersten Konfiguration zur zweiten Konfiguration beginnt, wenn das erste Verriegelungsmerkmal (330) und das zweite Verriegelungsmerkmal (430) in Eingriff gelangen.

13. Verbinderanordnung (10, 12) nach einem der Ansprüche 10 bis 12, wobei:
die radiale Innenfläche (404) des Eingriffshülseneingriffselements (420) glatt ist und
die äußere Eingriffsfläche (302) des Kernelements (300) glatt ist;
sodass, wenn sich das Vorderkantenende (310) des Kernelements (300) im zweiten Bereich (454) der Eingriffshülse (400) befindet, die radiale Innenfläche (404) des Eingriffselements (420) die äußere Kernelementeingriffsfläche (302) berührt.

14. Verbinderanordnung (14) nach Anspruch 8 oder 9, wobei:
das erste Verriegelungsmerkmal (330) an der Außenfläche (302) des Kernelements (300) vorgesehen ist und eine Halterung (340) umfasst, die sich von der äußeren Eingriffsfläche (302) von der Vorderkante (310) des Kernelements (300) zur Hinterkante (312) des Kernelements (300) nach außen und daran entlang erstreckt und ferner Zähne (342) umfasst, die an einer Seite der Halterung vorgesehen sind und sich in eine erste Umfangsrichtung erstrecken;
das zweite Verriegelungsmerkmal (430) an einer Seite des Eingriffselements (420) der Eingriffshülse (400) vorgesehen ist und Zähne (442) umfasst, die sich in eine der ersten Umfangsrichtung entgegengesetzte zweite Umfangsrichtung erstrecken;
die Zähne (342) des ersten Verriegelungsmerkmals (330) und die Zähne (442) des zweiten Verriegelungsmerkmals (430) dazu ausgelegt sind, ineinander einzugreifen, sodass, wenn sich die Zähne (342) des ersten Verriegelungsmerkmals (330) und die Zähne (442) des zweiten Verriegelungsmerkmals (430) in Eingriff befinden, das Kernelement (300) und die Eingriffshülse (400) miteinander verriegelt sind.

15. Verbinderanordnung (14) nach Anspruch 10 bis 14, wobei:
das Kernelement (300) und die Eingriffshülse (400) um die Mittelachse (450) zueinander drehbar sind, um das erste Verriegelungsmerkmal (330) und das zweite Verriegelungsmerkmal (430) ineinander einzugreifen oder zu lösen.

## Revendications

1. Ensemble raccord (10, 12, 14) destiné à venir en prise avec un premier élément (100), le premier élément (100) définissant une cavité (102) avec une surface de contact (104), et une ouverture (106) vers la cavité (102) ; l'ensemble raccord (10, 12, 14) comprenant :
un élément central (300) présentant une surface de mise en prise extérieure (302) s'étendant depuis une extrémité de bord antérieur (310) vers une extrémité de bord postérieur (312) ;
un manchon de mise en prise (400) s'étendant d'une extrémité de bord antérieur (410) jusqu'à une extrémité de bord postérieur (412), le manchon de mise en prise (400) définissant un passage (402) ayant un axe central (450), le passage (402) du manchon de mise en prise présentant une ouverture (406) au niveau de l'extrémité de bord postérieur (412) ;
l'ouverture (406) du manchon de mise en prise et le passage (402) de manchon de mise en prise étant configurés pour recevoir au moins une partie de l'élément central (300) s'étendant depuis l'extrémité de bord antérieur (310) de l'élément central (300) ;
le manchon de mise en prise (400) comportant :
un élément de mise en prise (420) ayant une surface extérieure (422) et une surface intérieure (404) ;
la surface extérieure (422) de l'élément de mise en prise (420) étant configurée pour entrer en prise avec la surface de contact (104) du premier élément (100) ;
la surface intérieure (404) de l'élément de mise en prise (420) ayant une première région (452) et une seconde région (454) ; la seconde région (454) s'étendant d'une extrémité libre (440) définie par l'extrémité de bord antérieur (410) à l'extrémité de la première région (452), et la première région (452) s'étendant vers l'ouverture (406) du passage (402) du manchon de mise en prise ;
la surface intérieure (404) de l'élément de mise en prise (420) et la surface de mise en prise extérieure (302) de l'élément central (300) étant configurées pour pouvoir coulisser l'une par rapport à l'autre dans la première région (452) et la seconde région (454) ;
l'élément central (300) et le manchon de mise en prise (400) étant configurés de telle sorte qu'une fois le manchon de mise en prise (400) introduit dans la cavité (102) du premier élément structurel :
l'ensemble raccord (10, 12, 14) peut être placé dans une première configuration dans laquelle le manchon de mise en prise (400) peut coulisser par rapport à la surface de contact (104) de la cavité (102) du premier élément structurel lorsque l'extrémité de bord antérieur (310) de l'élément central (300) est située le long de la première région (452) de l'élément de mise en prise (420) ; et
l'ensemble raccord (10) peut être placé dans une seconde configuration dans laquelle le manchon de mise en prise (400) est verrouillé par rapport au premier élément structurel (100) lorsque l'extrémité de bord antérieur (310) de l'élément central (300) est en prise avec la seconde région (454) de l'élément de mise en prise (420).

2. Ensemble raccord (10, 12, 14) selon la revendication 1, dans lequel l'élément central (300) et le manchon de mise en prise (400) sont configurés de telle sorte que lorsque l'extrémité de bord antérieur (310) de l'élément central (300) coulisse le long d'au moins une partie de la seconde région (454) de la surface intérieure (404) de l'élément de mise en prise (420), la surface extérieure (422) de l'élément de mise en prise (420) est poussée pour venir en prise avec la surface de contact (104) de la cavité du premier élément (100) jusqu'à ce que l'ensemble raccord (10) se trouve dans la seconde configuration.

3. Ensemble raccord (10, 12, 14) selon la revendication 1 ou la revendication 2, dans lequel :
lorsque l'extrémité de bord antérieur (310) de l'élément central (300) est située le long de la première région (452) de la surface intérieure (404) de l'élément de mise en prise (420), un ajustement avec jeu est maintenu entre la surface intérieure (404) du manchon de mise en prise (400) et la surface de mise en prise extérieure (302) de l'élément central (300) ;
lorsque l'extrémité de bord antérieur (310) de l'élément central (300) est en prise avec la seconde région (454) de la surface intérieure (404) de l'élément de mise en prise (420), un ajustement avec serrage est établi entre la surface intérieure (404) du manchon de mise en prise (400) et la surface de mise en prise extérieure (302) de l'élément central (300).

4. Ensemble raccord (10, 12, 14) selon l'une quelconque des revendications 1 à 3, dans lequel l'élément central (300) et le manchon de mise en prise (400) sont configurés de telle sorte que, lorsque l'extrémité de bord antérieur (310) de l'élément central (300) se déplace d'une position en prise avec la seconde région (454) de l'élément de mise en prise (420) jusqu'à une position le long de la première région (452) de l'élément de mise en prise (420), la surface de mise en prise extérieure (302) de l'élément central (300) se sépare de la surface de mise en prise intérieure (404) du manchon de mise en prise (400) de manière à permettre à l'élément de mise en prise (420) du manchon de mise en prise de se séparer de la surface de contact (104) de la cavité du premier élément (100), et de telle sorte que l'ensemble raccord (10) passe de la seconde configuration à la première configuration pour permettre ainsi au manchon de mise en prise (400) de coulisser le long de la surface de contact (104) de la cavité du premier élément structurel (100).

5. Ensemble raccord (10, 12, 14) selon l'une quelconque des revendications 1 à 4, dans lequel :
dans la première configuration, l'extrémité libre (440) de l'élément de mise en prise (420) est à une première distance (d1) de l'axe central (450) ; et
dans la seconde configuration l'extrémité libre (440) de l'élément de mise en prise (420) est à une deuxième distance (d2) de l'axe central (450),
la deuxième distance (d2) étant supérieure à la première distance (d1).

6. Ensemble raccord (10, 12, 14) selon l'une quelconque des revendications précédentes, dans lequel :
dans la première configuration, la surface extérieure (422) de l'élément de mise en prise augmente de diamètre depuis l'extrémité de bord antérieur (410) d'un premier diamètre à un second diamètre, puis s'étend vers l'extrémité de bord postérieur (412) avec une région (470) de diamètre constant.

7. Ensemble raccord (10, 12, 14) selon l'une quelconque des revendications précédentes, dans lequel :
dans la première configuration, le diamètre de la surface intérieure (404) de l'élément de mise en prise augmente depuis l'extrémité de bord antérieur (410) le long d'au moins une partie de la surface intérieure (404) de l'élément de mise en prise vers l'extrémité de bord postérieur (412).

8. Ensemble raccord (10, 12, 14) selon l'une quelconque des revendications précédentes, dans lequel :
l'élément central (300) est pourvu d'un premier élément de verrouillage (330) ;
le manchon de mise en prise (400) est pourvu d'un second élément de verrouillage (430) ;
dans lequel le premier élément de verrouillage (330) et le second élément de verrouillage (430) sont configurés pour entrer en prise l'un avec l'autre afin de verrouiller le manchon de mise en prise (400) et l'élément central (300) ensemble ; et configurés pour se séparer l'un de l'autre afin que le manchon de mise en prise (400) et l'élément central (300) soient séparables.

9. Ensemble raccord (10, 12, 14) selon la revendication 8, dans lequel :
le premier élément de verrouillage (330) et le second élément de verrouillage (430) sont positionnés de manière à ce que :
avant que le premier élément de verrouillage (330) entre en prise avec le second élément de verrouillage (430), l'extrémité de bord antérieur (310) de l'élément central (300) se trouve dans la première région (452) du manchon de mise en prise (400) et l'ensemble raccord (10, 12, 14) se trouve dans la première configuration ; et
une fois que le premier élément de verrouillage (330) vient en prise avec le second élément de verrouillage (430), l'extrémité de bord antérieur (310) de l'élément central (300) se trouve dans la seconde région (454) du manchon de mise en prise (400).

10. Ensemble raccord (10, 12) selon l'une quelconque des revendications 8, 9, dans lequel :
le premier élément de verrouillage (330) est disposé sur une surface extérieure de l'élément central (300), entre la section de la surface de mise en prise radialement extérieure (302) qui vient en prise avec la surface radialement intérieure (404) de l'élément de mise en prise (420) et l'extrémité de bord postérieur (312) de l'élément central (300) ; et
le second élément de verrouillage (430) est disposé sur la surface intérieure du manchon de mise en prise (400), entre la surface de mise en prise radialement intérieure (404) de l'élément de mise en prise (420) et l'extrémité de bord postérieur (412) du manchon de mise en prise (400).

11. Ensemble raccord (10, 12) selon la revendication 10, dans lequel :
a. le premier élément de verrouillage (330) sur l'élément central (300) est un premier filetage ; et
b. le second élément de verrouillage (430) sur le manchon de mise en prise (400) est un deuxième filetage.

12. Ensemble raccord (10, 12) selon la revendication 10 ou la revendication 11, dans lequel la transition de la première configuration à la seconde configuration commence lorsque le premier élément de verrouillage (330) et le second élément de verrouillage (430) entrent en prise.

13. Ensemble raccord (10, 12) selon l'une quelconque des revendications 10 à 12, dans lequel :
la surface radialement intérieure (404) de l'élément de mise en prise (420) du manchon de mise en prise est lisse ; et
la surface de mise en prise extérieure (302) de l'élément central (300) est lisse ;
de sorte que lorsque l'extrémité de bord antérieur (310) de l'élément central (300) se trouve dans la seconde région (454) du manchon de mise en prise (400), la surface radialement intérieure (404) de l'élément de mise en prise (420) est en contact avec la surface de mise en prise extérieure (302) de l'élément central.

14. Ensemble raccord (14) selon la revendication 8, 9, dans lequel :
le premier élément de verrouillage (330) est disposé sur la surface extérieure (302) de l'élément central (300) et comprend un plot (340) qui s'étend vers l'extérieur depuis et le long de la surface de mise en prise extérieure (302) depuis le bord antérieur (310) de l'élément central (300) vers le bord postérieur (312) de l'élément central (300), et comprend en outre des dents (342) disposées sur un côté du plot pour s'étendre dans une première direction circonférentielle ;
le second élément de verrouillage (430) est disposé sur un côté de l'élément de mise en prise (420) du manchon de mise en prise (400) et comprend des dents (442) qui s'étendent dans une seconde direction circonférentielle opposée à la première direction circonférentielle ;
les dents (342) du premier élément de verrouillage (330) et les dents (442) du second élément de verrouillage (430) sont conçues pour se mettre en prise solidairement de manière à ce que lorsque les dents (342) du premier élément de verrouillage (330) et les dents (442) du second élément de verrouillage (430) sont en prise, l'élément central (300) et le manchon de mise en prise (400) soient verrouillés ensemble.

15. Ensemble raccord (14) selon les revendications 10 à 14, dans lequel :
l'élément central (300) et le manchon de mise en prise (400) peuvent tourner l'un par rapport à l'autre autour de l'axe central (450) de manière à mettre en prise et à séparer le premier élément de verrouillage (330) et le second élément de verrouillage (430).
